# EUROPEAN PATENT SPECIFICATION

(11) **EP 0 849 949 B1**
(45) Date of publication and mention of the grant of the patent: **06.11.2002**
(21) Application number: 97203947.3
(22) Date of filing: 16.12.1997
(51) Int. Cl.: H04N 7/18

(54) **Assembly system for external stations of intercom and video-intercom devices**
Zusammensetzungssystem für Aussenstationen in Gegensprechanlage- und Videogegensprachanlagevorrichtungen
Système d'assemblage pour les stations extérieures de dispositifs d'interphone et d'interphone audiovisuel

(30) Priority: 19.12.1996 IT MI962668
(43) Date of publication of application: 24.06.1998
(73) Proprietor: BTICINO S.P.A., 20154 Milano (IT)
(72) Inventor: Fabrizi, Fabrizio, 24100 Bergamo (IT)
(74) Representative: Fusina, Gerolamo

(56) References cited:
- EP-A- 0 505 913
- DE-U- 9 407 760
- FR-A- 2 707 822
- G. REHMAN: "Mit Ton und Bild von Tür zu Tür" ELEKTROMARKT, vol. 55, no. 9, September 1973, pages 14-16, XP002029012

## Description

This invention relates to an assembling system for external stations of intercom and video-intercom devices.

The term "modular element" is usually used to mean a standardized unit which can be modified or extended. The implementation of a telephone, video-intercom, electrical or electronic system involves a specific installation for a characteristic operation, and currently requires the use of various products which are often not standardized and are therefore mutually incompatible.

This results in considerable drawbacks, as the products must be prepared individually for each requirement, with the result that the installations are conditioned by the type and dimensions of each appliance and the specific cabling.

Moreover, an excessive proliferation of appliances involves the need to provide numerous connection interfaces, with difficulties in servicing the installation, and high cost.

In particular, the handling of intercom and video-intercom systems, particularly if relatively complicated or particularly extensive, is difficult and absolutely uncontrollable, with the inevitable consequence of protracted implementation time and increased costs.

In this respect, to assemble the external stations, different types of frames for flush-mounting or surface-mounting are used, able to house a series of different functional modules, which are arranged in adjacent positions and on their outer surface comprise control and indicating members to be operated by the user.

Systems of audio and/or video intercom equipments for buildings are also known from DE9407760 U and from EP-A-0505913; however, said equipments can only be mounted and pathered by qualified user and their production and installation imply a great waste of time.

An object of the invention is to obviate the aforesaid drawbacks by providing an assembling system for external stations of intercom and video-intercom devices which, in one and the same structure, combines the advantages of modularity of electrical and electronic operating appliances (the so-called functional modules) arranged in the positioning frames, with a substantial further mechanical compatibility between special aesthetic finishes for the external stations and said functional modules.

A further object of the invention is to indicate a modular element assembly system which simplifies and facilitates the installation and connection operations, so that the system can also be installed by occasional unqualified users.

A further object of the present invention is to provide extreme flexibility of assembly, by combining together elements of standard dimensions and geometry, offering considerable speed of assembly, maintenance and parts replacement.

A further object of the present invention is to provide an assembly system for external stations of intercom and video-intercom devices which is of simple, rapid and economical construction, without using complex or costly technology.

These and further objects are attained by an assembling system for external stations of intercom and video-intercom devices in accordance with claim 1, to which reference should be made for brevity.

Advantageously, the functional modules are designed for analog systems, simplified digital systems and multifunction systems, or for mixed (analog and digital) systems.

The intercom and video-intercom system functional modules consist of electrical and electronic appliances (loudspeaker and microphone, call pushbuttons, telecamera, digital module and other accessories), which are assembled together in housings provided on the frame of the external stations.

The modules are applied to the frame from the outside by a mechanical snap-fixing system, the external station being completed by a decorative bezel mounted on the frame.

Each functional module is completed by an external standardized modular steel faceplate, comprising control and indicating elements on its surface for the functions of the corresponding module.

In practice, modular functional "motors" are created, each having external finishes mechanically compatible with the technical specifications of the "motor", so that the operations involved in mounting the faceplates on the modules and the modules on the frames can be carried out easily and rapidly during the construction of the external stations, in accordance with the technical specifications desired by the users and the number of system items.

This avoids the problem of having to obtain costly specialized labour for installing and assembling the modules on site.

Another method of installation is to use, instead of the module positioning frames, a series of frames formed from section bars which also provide a decorative function. In this case the decorative bezels are not used.

Again, the cover faceplates for at least two modules can be replaced by a single steel faceplate which, on the basis of the arrangement of the control and indicating elements positioned on the outer surface, indicates which and how many modules are present.

Further characteristics and advantages of the invention will be more apparent from the description of a preferred but not exclusive embodiment of the assembling system illustrated by way of non-limiting example on the accompanying schematic drawings, in which:

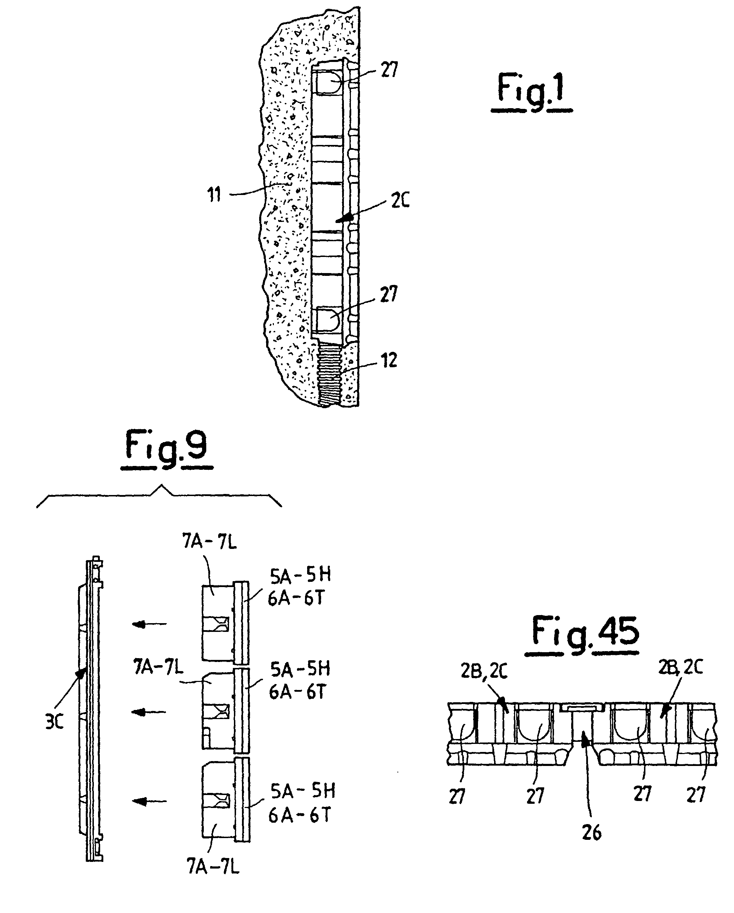

Figure 1 is a partly sectional partial view of a flush-mounting modular box according to the present invention;

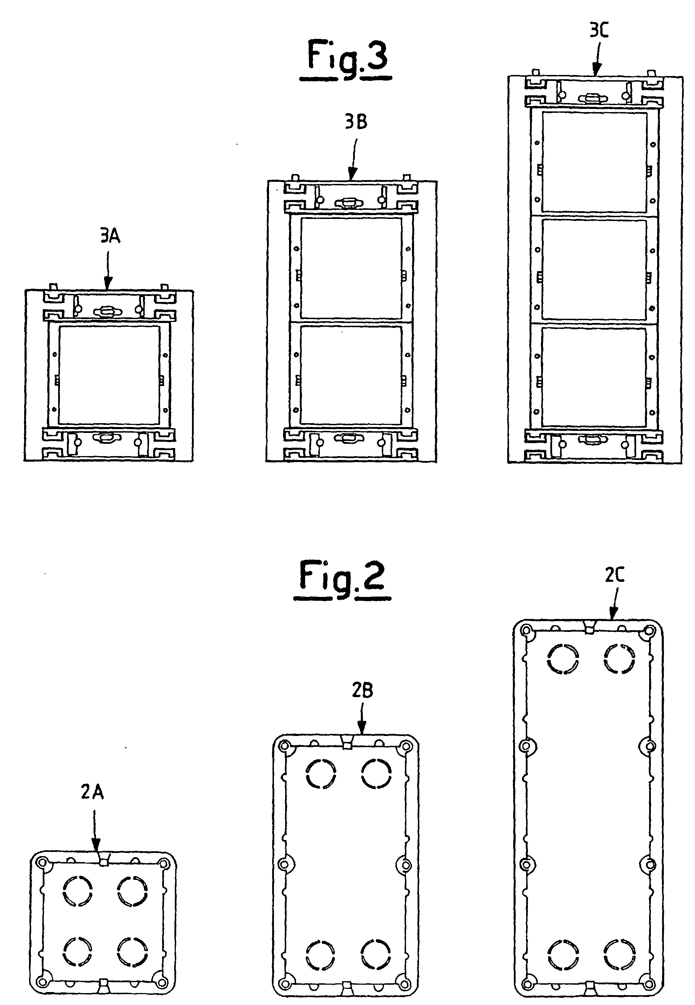

Figure 2 is a plan view of a series of flush-mounting modular boxes according to the present invention;
Figure 3 is a front view of a series of modular positioning frames according to the present invention;

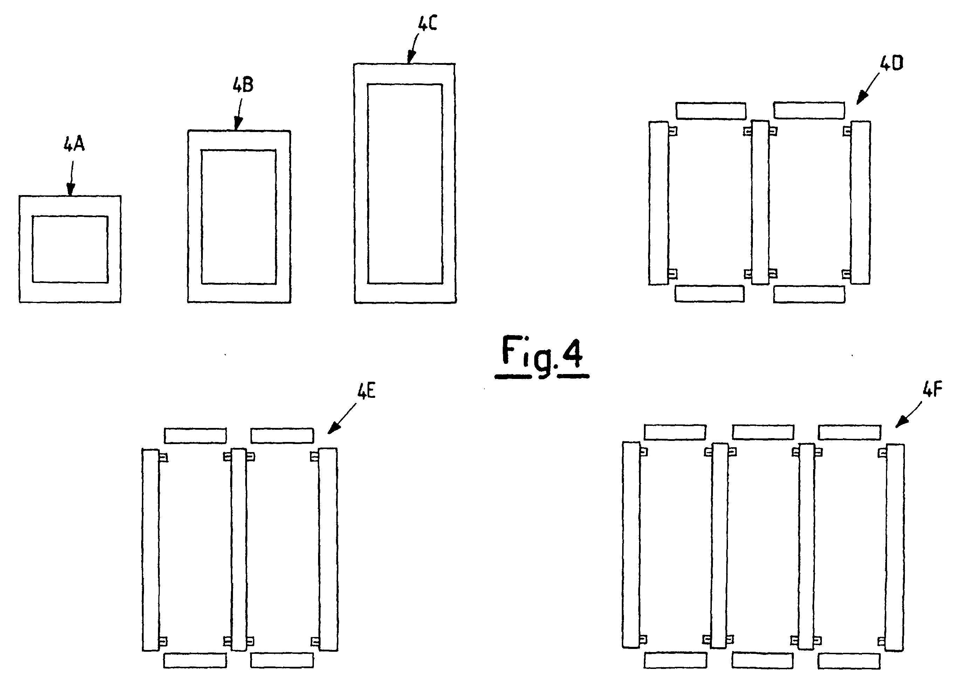

Figure 4 is a front view of a series of modular decorative bezels, both integral and sectional, according to the present invention;

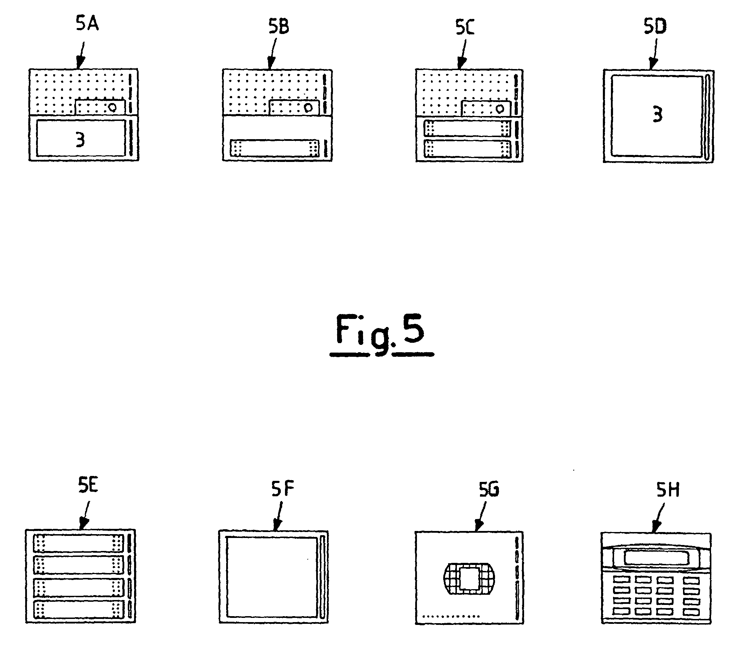

Figure 5 shows a series of plastic modular faceplates, each arranged to cover a functional module, according to the present invention;
Figures 6 and 6' show a series of aluminium modular faceplates, each arranged to cover a functional module, according to the present invention;
Figure 7 is a front view of a series of functional modules for analog, digital or mixed systems, according to the present invention;
Figures 8, 8', 8" and 8"' show a series one-piece steel faceplates for covering the external stations, according to the invention;
Figure 9 is an exploded view of a scheme for assembling a series of three functional modules, provided with a modular faceplate, in their respective flush-mounting boxes, according to the present invention;
Figures 10 to 44 show a front view of a series of possible modular or one-piece configurations for external intercom and video-intercom stations formed in accordance with an assembly scheme according to the present invention;
Figure 45 is a partial side view of two flush-mounting modular boxes, assembled side by side in the same external station of a system, according to the present invention.

In said figures, the reference numeral 11 indicates a wall portion (in the vicinity of a building entrance door) in which a modular box 2A-2C used in an intercom or video-intercom system can be flush-mounted, 12 indicates a sleeve (to be connected to the modular box 2A-2C) enclosing the system electric cables, and 26 indicates a wedge element, which is inserted into recesses 27 provided in the lateral surfaces of the flush-mounting boxes 2A-2C and protected by membranes, to assemble two or more modular boxes 2A-2C side by side in one and the same external station of the system.

If the external station is to be surface-mounted, instead of the flush-mounting box 2A-2C a container is provided for the appliances (functional modules 7A-7L) of the system, this being fixed directly to the wall surface.

The reference numerals 2A, 2B, 2C indicate three different types of flush-mounting modular boxes provided respectively for one, two and three functional modules 7A-7L; 3A, 3B, 3C indicate three different types of die-cast aluminium frame, suitable for positioning one, two and three functional modules 7A-7L respectively; 4A, 4B, 4C indicate three different types of anodized aluminium bezel to be applied to the frames 3A, 3B, 3C respectively; 4D, 4E, 4F indicate three different types of sectional polycarbonate bezel provided for positioning four, six and nine functional modules 7A-7L; and 5A-5H indicate different types of plastic faceplates for covering the front surfaces of a like number of functional modules 7A-7L.

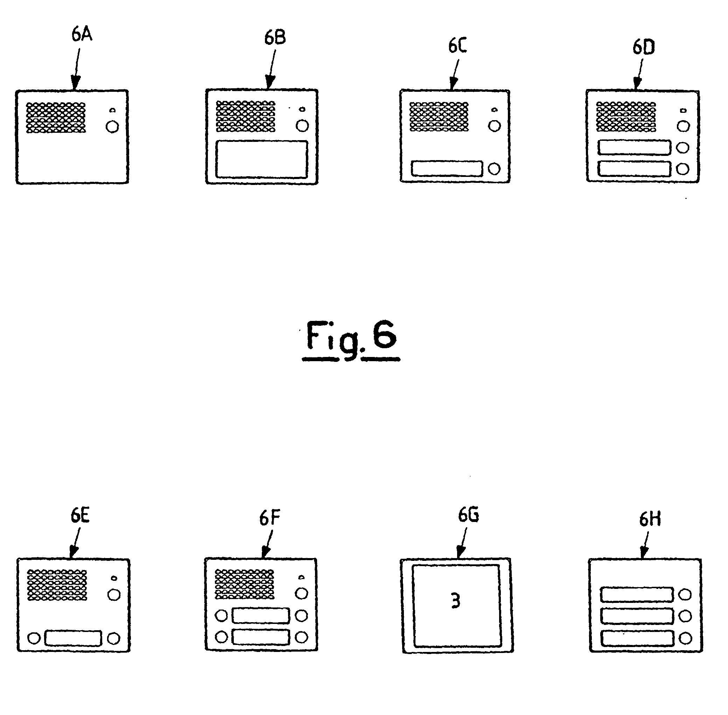

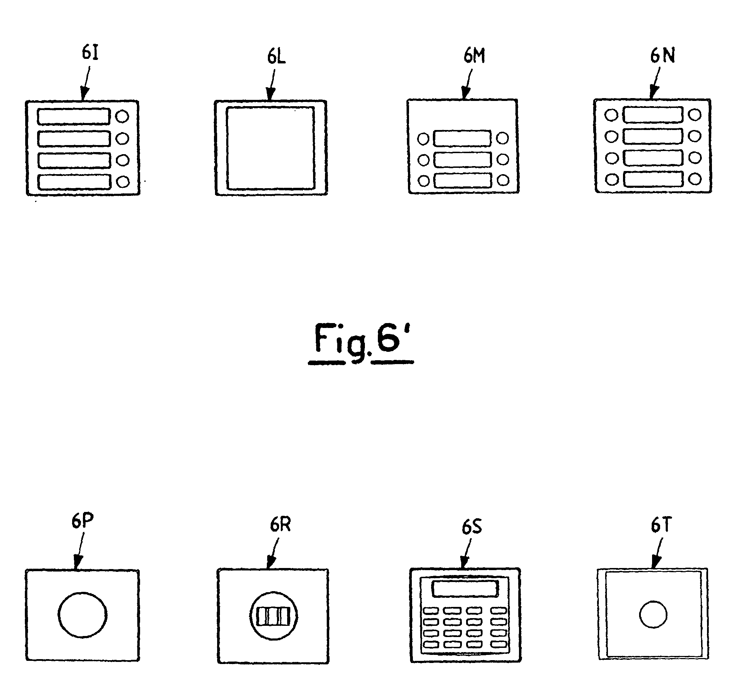

In Figures 6 and 6', 6A-6T indicate different types of aluminium faceplates for use as an alternative to the plastic faceplates 5A-5H.

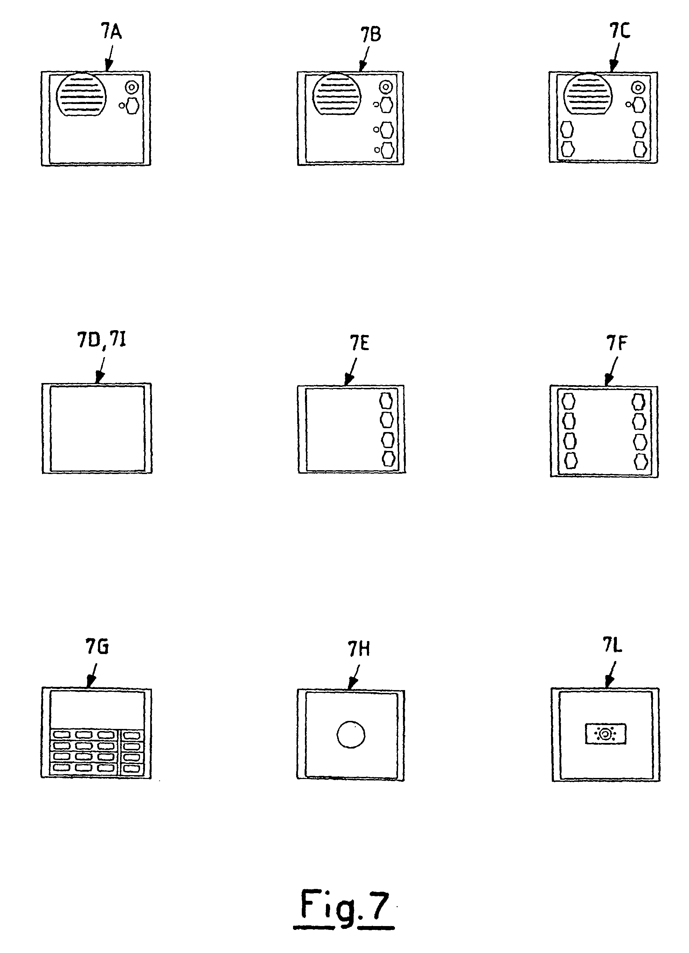

The functional modules indicated in Figure 7 by the reference numerals 7A-7L are housed within the positioning frames 3A, 3B, 3C or, in the case of flush-mounting, in the flush-mounting modular boxes 2A, 2B, 2C.

Specifically, 5A indicates a plastic faceplate used to cover a phonic module with an illuminated house plate (also used for the "wait" signal), 5B indicates a plastic faceplate used to cover a phonic module with a call pushbutton (or a horizontally aligned double call pushbutton) and a name card, 5C indicates a plastic faceplate used to cover a phonic module with two call pushbuttons (or two double call pushbuttons in two horizontal rows) and name cards, 5D indicates a plastic faceplate carrying the house plate (with street number or address) and usable for the "wait" signal, 5E indicates a plastic faceplate used to cover a functional module comprising four call pushbuttons arranged in a column, with name cards (or four double call pushbuttons arranged in four horizontal rows), 5F indicates a faceplate used to cover an accessory module (for example a hole cover), 5G indicates a plastic faceplate used to cover functional modules such as an image-filming telecamera, a presence and darkness sensor, and a badge reader, and finally 5H indicates a plastic faceplate used to cover a digital module for code-calling the various system users and for controlling access.

The modular aluminium faceplates, shown in Figures 6 and 6', comprise a faceplate 6A for a phonic module, a faceplate 6B for a phonic module with an illuminated house plate, also usable for the "wait" signal, a faceplate 6C for a phonic module with a call pushbutton and a name card, a faceplate 6D for a phonic module with two call pushbuttons and name cards, a faceplate 6E for a phonic module with a horizontally aligned double call pushbutton and name card, a faceplate 6F for a phonic module with two double pushbuttons in two horizontal rows, a house plate faceplate 6G usable for the "wait" signal, a faceplate 6H with three pushbuttons arranged in one column with name cards, a faceplate 6I with four pushbuttons arranged in one column with name cards, a hole-cover faceplate 6L, a faceplate 6M with six pushbuttons arranged in three horizontal rows with name cards, a faceplate 6N with eight pushbuttons arranged in four horizontal rows with name cards, a faceplate 6P for telecamera modules, a faceplate 6R for a darkness sensor and presence sensor, a faceplate 6S for a numerical code digital module, and a faceplate 6T for a badge reader module or with a hole for positioning a lock.

The various types of functional modules 7A-7L provided are shown in Figure 7 and are formed for either analog systems, digital systems or mixed systems.

Specifically, 7A indicates a functional module with an integral phonic unit, microphone and loudspeaker volume control, acoustic call confirmation, illuminated pushbutton for switching on lights and call generator, microphone, loudspeaker and illuminated house plate, also usable for the "wait" signal, 7B indicates a phonic module for a faceplate with one or two call pushbuttons and name card, 7C indicates a phonic module for a faceplate with one or two horizontally aligned double call pushbuttons and name card, 7D indicates a module for a house plate faceplate with illumination, arranged for the "wait" signal, 7E indicates a module for a faceplate with three or four pushbuttons arranged in one column with name cards, 7F indicates a module for a faceplate with three or four double pushbuttons arranged in three horizontal rows with name cards, and 7G indicates a module with a dedicated keypad and display for digital numerical code calling (up to nine hundred and ninetynine combinations are possible, corresponding to a like number of call pushbuttons).

The module 7G can be provided with an illuminated keypad for operating electrical locks or for activating auxiliary systems by dialling numerical codes or programming the opening directly from the keypad; two numerical codes are available, together with acoustic and visual confirmation of correct code keying. An electric lock can also be operated by an infrared remote control.

7H indicates a module for a faceplate with a lock hole or for a badge reader faceplate. The module can also contain a darkness sensor and/or a presence sensor for activating the external lights or for activating other functions, horizontal sensing width adjustment and adjustable timing.

Finally, 7I indicates a hole-cover module, and 7L indicates a CCD black and white or colour telecamera module, with integrated illumination.

A particular function of the telecamera module enables the lens to be orientated upwards and downwards during installation or to be controlled from the internal station; the lens can be of wide-angle type and provided with an anti-misting device.

A mechanically combinable modular plastic faceplate 5A-5H or steel faceplate 6A-6T can be associated with each functional module 7A-7L, comprising control and indicating elements for the corresponding module 7A-7L.

One or more faceplates 5A-5H, 6A-6T can be replaced by a single one-piece faceplate 8A-8Z of stainless steel, produced in a limited number of standardized models and having on its surface the control and indicating elements for one or more corresponding functional modules 7A-7L.

In this case the arrangement of the control and indicating elements determines the position of the functional modules 7A-7L in the external station of the system in the sense that said functional modules 7A-7L are mounted on positioning frames 3A-3C following the configuration of the external surface of the one-piece faceplate 8A-8Z.

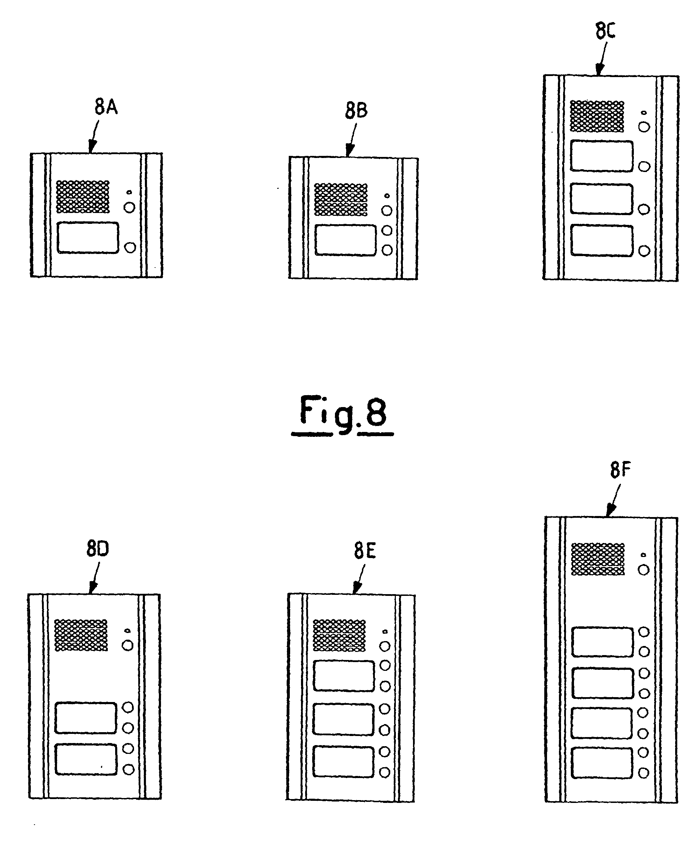

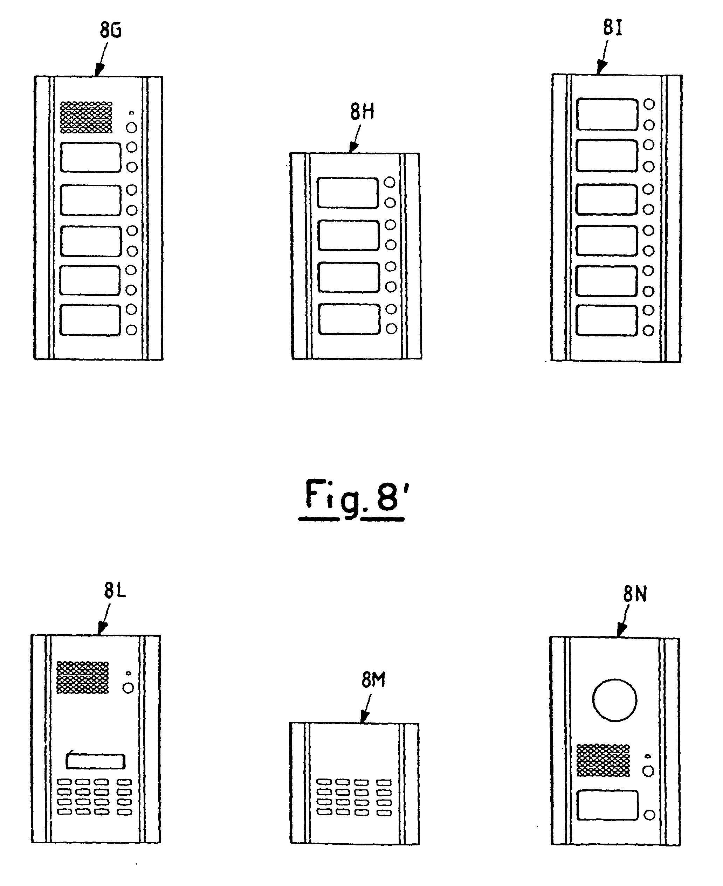

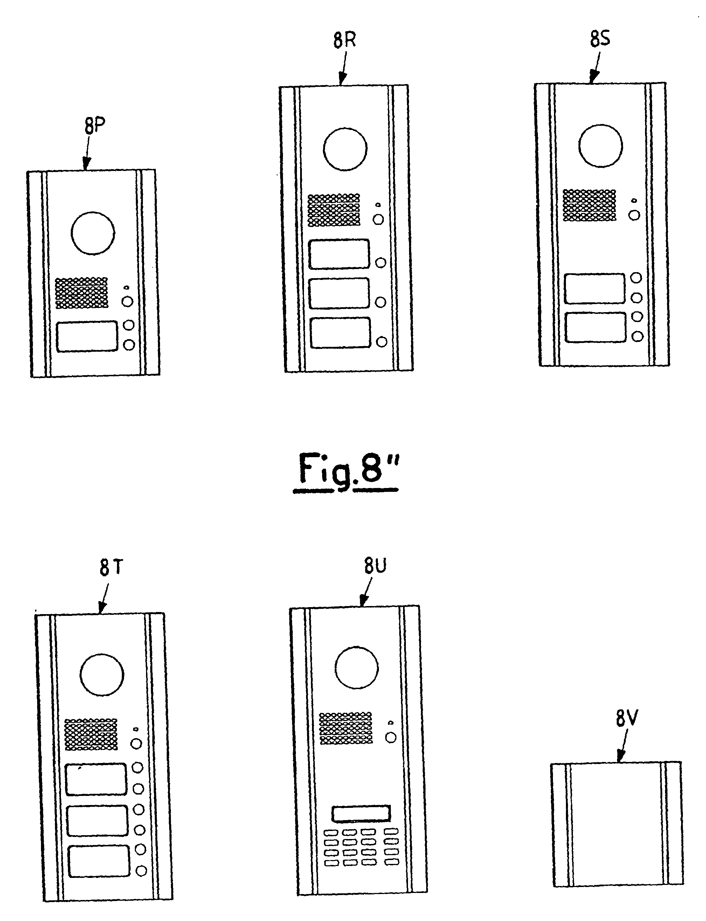

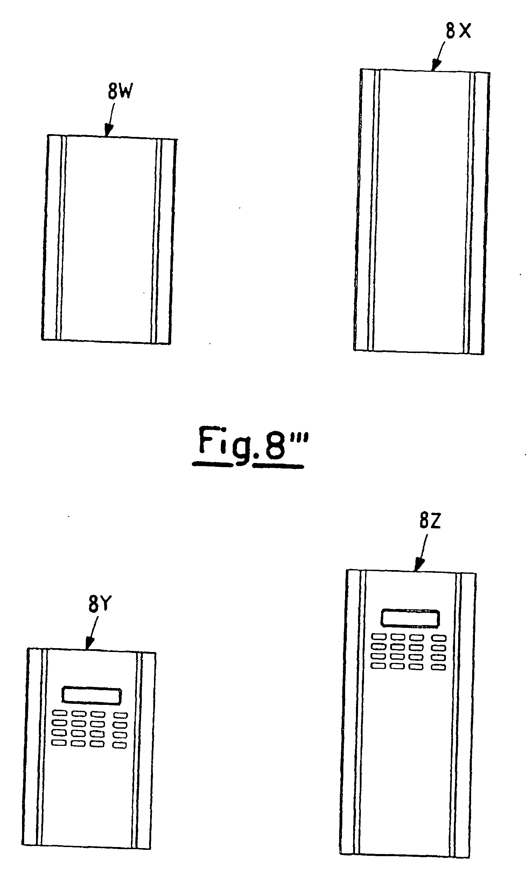

With reference to Figures 8, 8', 8" and 8 the one-piece faceplates 8A-8Z comprise: a faceplate 8A for a phonic module with a call pushbutton, a faceplate 8B for a phonic module with two call pushbuttons, a faceplate 8C for a phonic module with three call pushbuttons, a faceplate 8D for a phonic module with four call pushbuttons, a faceplate 8E for a phonic module with six call pushbuttons, a faceplate 8F for a phonic module with eight call pushbuttons, a faceplate 8G for a phonic module with ten call pushbuttons, a faceplate 8H with eight call pushbuttons, a faceplate 8I with twelve call pushbuttons, a faceplate 8L for a phonic module with a digital keypad, display, electric lock and acoustic call confirmation, a faceplate 8M for a numerical code digital module, a faceplate 8N for a phonic module and telecamera with a call pushbutton, a faceplate 8P for a phonic module and telecamera with two call pushbuttons, a faceplate 8R for a phonic module and telecamera with three call pushbuttons, a faceplate 8S for a phonic module and telecamera with four call pushbuttons, a faceplate 8T for a phonic module and telecamera with six call pushbuttons, a faceplate 8U for a phonic module and telecamera with numerical code digital keypad, a neutral faceplate 8V for covering one module, a neutral faceplate 8W for covering two modules, a neutral faceplate 8X for covering three modules, a faceplate 8Y with a numerical code digital keypad for covering two modules, and a faceplate 8Z with a numerical code digital keypad for covering three modules.

Whether using modular faceplates 5A-5H, 6A-6T, or using one-piece faceplates 8A-8Z, the functional modules 7A-7L are coupled to the positioning frames 3A, 3B, 3C in the spaces provided for one, two or-three modules respectively, by inserting them from the outside into the inside of the flush-mounting box or into the inside of the container provided directly on the wall. Mounting is completed by applying the desired faceplate (of plastic, aluminium or one-piece steel) to the corresponding module 7A-7L.

If applying modular faceplates 5A-5H, 6A-6L, the external station is completed with a decorative bezel, 4A, 4B or 4C respectively, of the same colour as the inserted modules 7A-7L, which is applied to the frame 3A, 3B or 3C.

If flush-mounting the external stations, a single structure can alternatively be used, in which the modular box 2A-2C and the decorative bezel 4A-4C are integrated.

Starting from certain standard external station configurations (corresponding to the installation of one, two or three functional modules 7A-7L, as stated heretofore), the most varied combinations of modules 7A-7L, faceplates 5A-5H, 6A-6T, 8A-8Z, flush-mounting boxes 2A, 2B, 2C (if present) and positioning frames 3A, 3B, 3C can be obtained.

In this respect, modular boxes 2A, 2B, 2C or containers of one and the same type can be connected together by suitable wedge-shaped spacers 26, which are fixed into recesses 27, to increase the types and functional characteristics of the external stations.

Thus for example, two modular boxes 2B or containers and two frames 3B can be positioned adjacent along the major side to house four functional modules 7A-7L; in this specific case, a sectional bezel 4D for covering and decorative purposes can be used.

In the same manner by positioning two or three modular boxes 2C or containers adjacent along the major side, six or nine functional modules 7A-7L can be housed. In this case, the sectional bezels 4E, 4F can be used respectively.

In this manner, a large number of arrangements are formed able to satisfy the most varied client requirements, whether of technical or functional type or relative to the expandability of the system.

In practice, intercom and video-intercom systems can be constructed for any type of building, from a small one-family house or firm to a block, and up to a large complex of dwellings.

The functional modules 7A-7L present aesthetic surface finishes mechanically compatible with the various modular configurations of the faceplates 5A-5H, 6A-6T, 8A-8Z.

In this manner a duplex modularity of the assembly scheme of the invention is achieved, namely between the positioning frames 3A-3C and functional modules 7A-7L and between the functional modules 7A-7L and the faceplates 5A-5H, 6A-6T, 8A-8Z used to cover them.

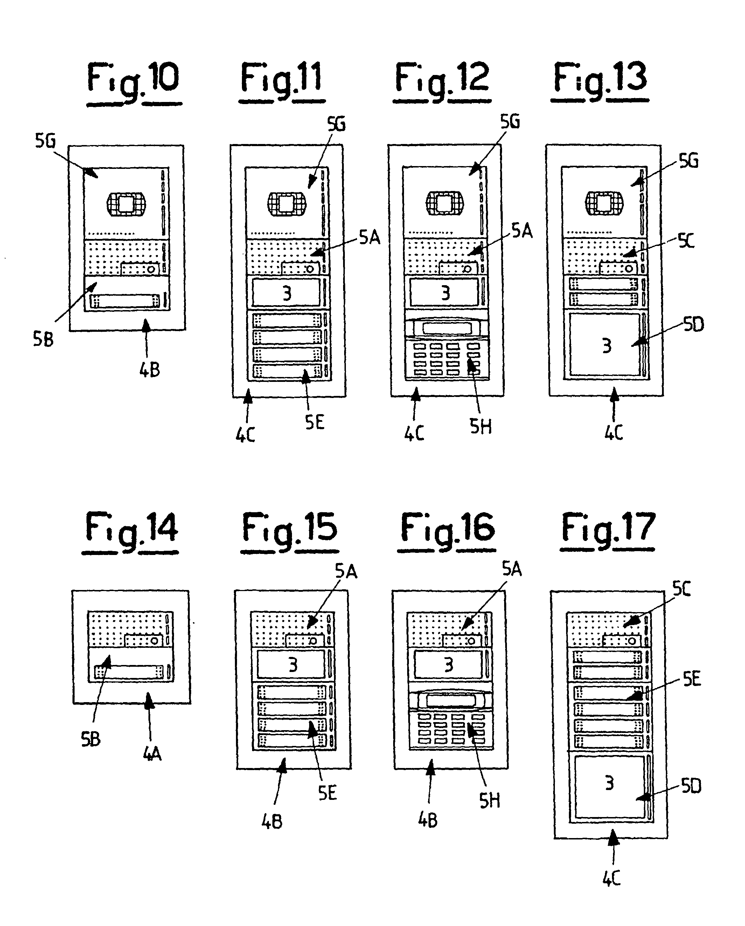

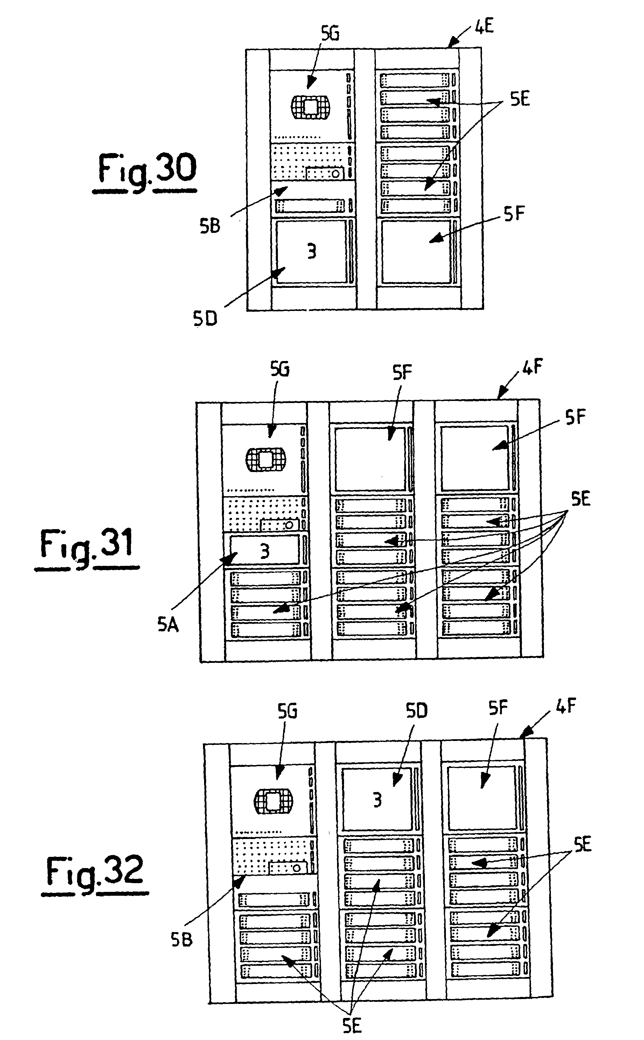

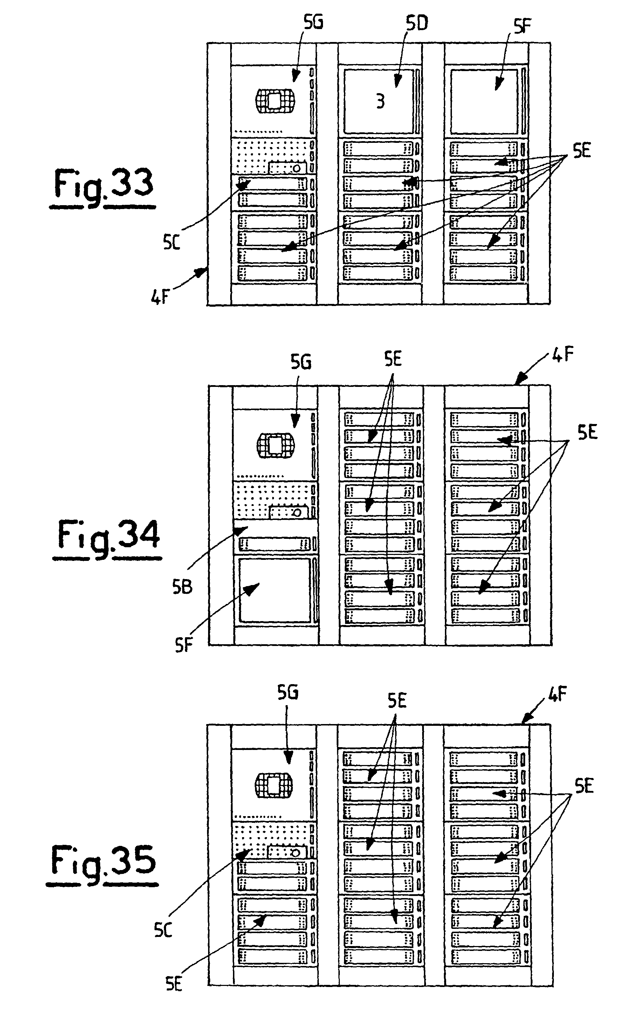

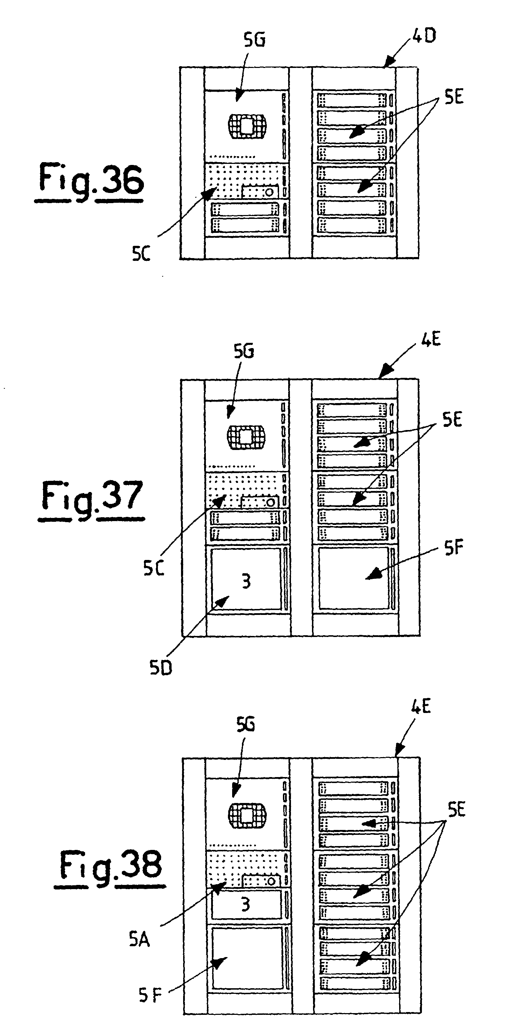

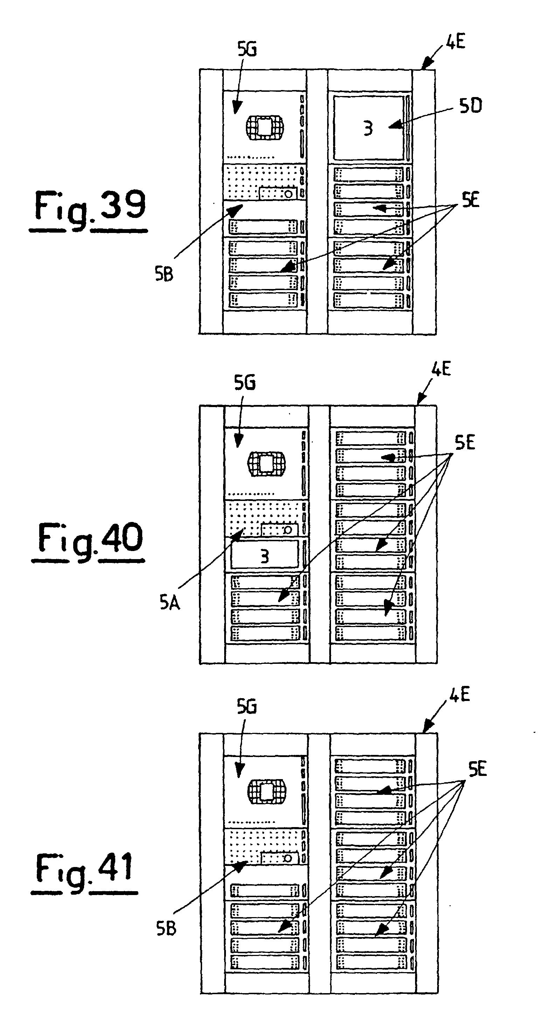

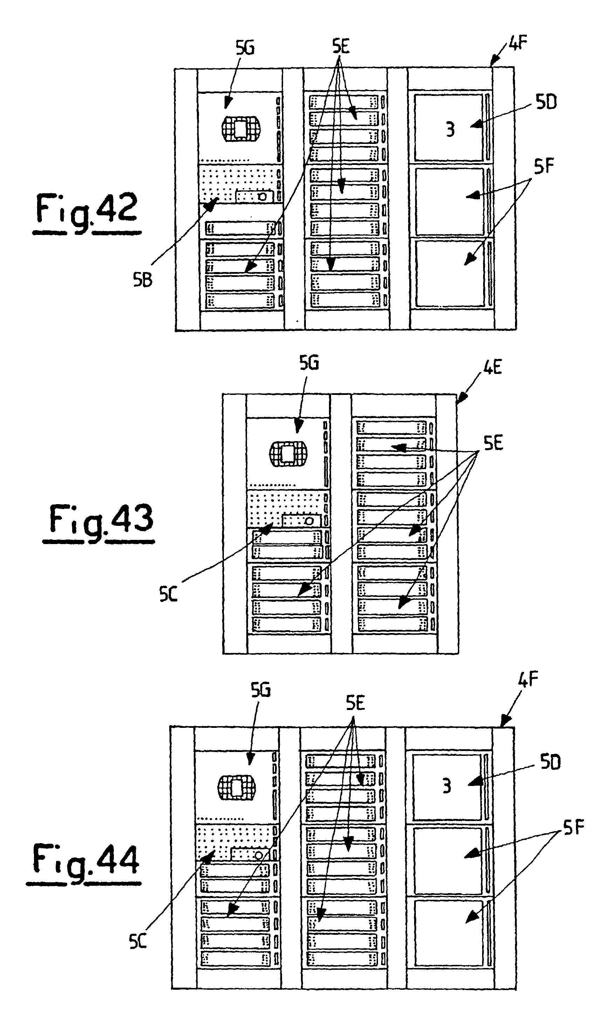

Figures 10-44 show by way of non-limiting example some preferred embodiments of external stations for intercom and video-intercom . systems with one, two, three, four, six and nine functional modules 7A-7L and respective faceplates 5A-5H, with decorative bezels 4A-4F.

Specifically, Figure 10 represents an external video-intercom station with two functional modules, having a faceplate 5G covering a CCD telecamera module and a faceplate 5B covering a phonic module with one call pushbutton; Figure 11 represents an external video-intercom station with two functional modules, having a faceplate 5G covering a CCD telecamera module and a faceplate 5E covering a module with four call pushbuttons; Figure 12 represents an external video-intercom station with two functional modules, similar to that shown in Figure 11, in which the faceplate 5E is replaced by a faceplate 5H covering a digital module for calling various users; Figure 13 represents an external video-intercom station with three functional modules, having a first faceplate 5G covering a CCD telecamera module, a second faceplate 5C covering a phonic module with two call pushbuttons, and a third hole-cover faceplate 5F.

Figure 14 represents an external intercom station with a faceplate 5B covering a phonic module with one call pushbutton, Figure 15 represents an external intercom station with two functional modules having a faceplate 5A covering a phonic module with house plate and a faceplate 5E covering a module with four call pushbuttons, Figure 16 represents an external intercom station with a faceplate 5A covering a phonic module with house plate and a faceplate 5H covering a digital module, and Figure 17 represents a phonic station with three functional modules, having a first faceplate 5C covering a phonic module with two call pushbuttons, a second faceplate 5E covering a module with four call pushbuttons and a third hole-cover faceplate 5F.

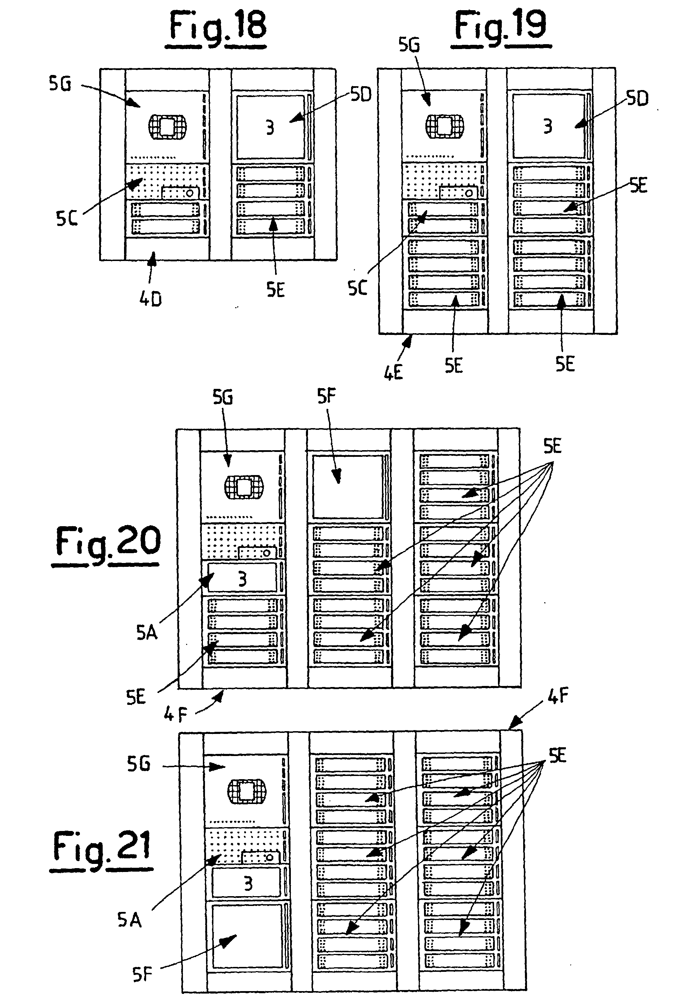

Figures 18, 19, 20, 21 show a series of four external video-intercom stations, with four, six and nine functional modules respectively, in which two or three positioning frames are placed side by side.

All these stations comprise a faceplate 5G covering a CCD telecamera module, the remaining faceplates 5C (covering a phonic module with two call pushbuttons), 5E (covering a functional module with four call pushbuttons) and 5F( hole-cover faceplate) being combined in various ways according to the technical requirements of the system and the number of users.

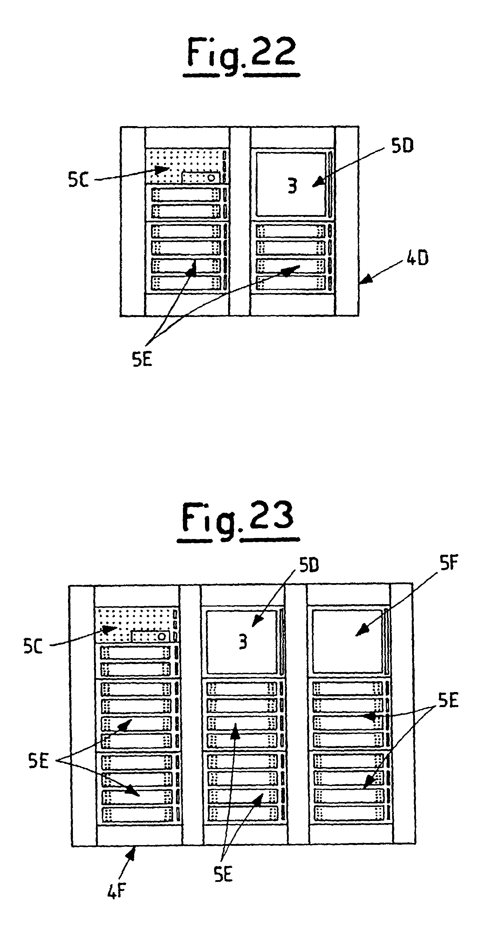

Figures 22 and 23 show two external intercom stations, having respectively four functional modules (with two side-by-side positioning frames 3B) and nine functional modules (with three side-by-side positioning frames 3C), comprising faceplates 5C covering phonic modules with two call pushbuttons, faceplates 5E covering modules with four call pushbuttons and hole-cover faceplates 5F.

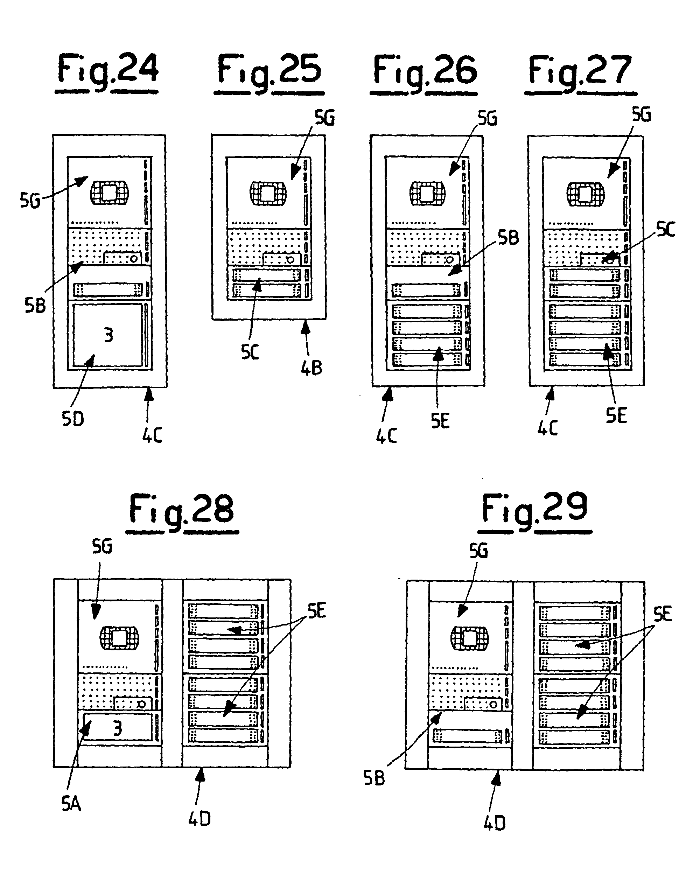

Other alternative preferred arrangements of functional modules (and corresponding faceplates) are represented (by way of non-limiting example) in Figures 24-44. These illustrate external video-intercom stations (possibly with house plate and/or hole cover) comprising one, two, five, six, seven, eight, nine, ten, eleven, twelve, thirteen, fifteen, sixteen, seventeen, eighteen, nineteen, twenty, twentyone, twentytwo, twentyfive and twentysix call pushbuttons.

With regard to the positioning of the modules in the external intercom and video-intercom stations, this is done following certain rules.

In particular, the configurations used in the video-intercom systems all comprise a CCD telecamera, which is always positioned in the first position, at the top left, of the external station.

The phonic modules are usually positioned immediately below the telecamera module; whereas the digital module for calling the various users is positioned immediately below the phonic modules.

The audio or video systems with a digital module must consist of three modules (telecamera module, phonic module with house plate, digital module); it is not possible to add modules with call pushbuttons.

Moreover, in combinations of nine functional modules for video systems (three positioning frames 3C each comprising three housings), the telecamera module and the phonic modules are usually positioned on the left frame or right frame of the external station, but not on the central frame.

With regard to audio intercom system configurations, the phonic modules are positioned in the first position, at the top left, and the digital module (if present) is positioned immediately below the phonic modules but is never used in combination with functional modules comprising call pushbuttons.

In combinations of nine functional modules (three positioning frames 3C each with three housings), the phonic modules are usually positioned on the left frame or on the right frame of the external station, but not on the central frame.

The maximum capacity is twentysix call pushbuttons (nine functional module configuration). For more than twentysix pushbuttons the digital module must be used.

In addition, each call pushbutton can comprise two electrical contacts positioned at the two ends, according to the typical configuration of the so-called rocker pushbutton, which rocks on a central pin, or two call pushbuttons can be provided, each positioned at one end of a single name card, which in this case must be of such a design as to be able to carry two names.

In this case, the modularity enables the intercom system to be extended by merely extending the cabling.

Finally, it should be noted that the geometrical dimensions of each functional module 7A-7L are always the same, independently of its function, and hence the positions of the various modules 7A-7L within the frames 3A-3C and the positions of the faceplates 5A-5H, 6A-6T, 8A-8Z on the modules 7A-7L can be varied at will, both in the case of a new technical arrangement of the system or a change in the number of connected users, and in the case of a fault or maloperation in a determined appliance.

At the same time, the faceplates 5A-5H, 6A-6T covering said functional modules 7A-7L all have the same geometrical dimensions, so that they can be combined at will with the modules 7A-7L concerned.

These characteristics make it possible to directly assemble in the factory the external stations of intercom and video-intercom systems, by choosing and combining in the desired manner the functional modules 7A-7L with the relative faceplates, whether of plastic, coloured metal or one-piece steel.

It is hence very simple to extend or modify a system even many times, before it is installed in an actual building. In addition the replacement of defective items and the addition of new elements is facilitated, because such operations can be effected independently of the particular type of system, the installer having to operate on site only in terms of laying the wiring.

It is also apparent that all the details can be replaced by others technically equivalent, and that numerous modifications can be made to the scheme for assembling the external stations of intercom and video-intercom systems by the expert of the art without leaving the scope of protection of the present invention.

For example, another manner of assembling the functional modules in the external stations comprises, instead of the positioning frames, the use of frames formed from section bars which are also decorative. In this case, the decorative bezels are not mounted.

Moreover, as already stated, the functional modules can be mounted following the configuration indicated on the outer surface of a one-piece faceplate covering the entire external station; again in this case the different types of external station configuration are standardized and are produced directly in the factory ready for installation on site.

## Claims

1. An assembling system for external stations of intercom and video-intercom devices, of the type comprising a plurality of standardized modular frames (3A-3C), constituted by section bars which are fixed either to standardized flush-mounting modular boxes (2A-2C) or to containers laid on the surface of a wall (11) and which determine the positioning of a plurality of standardized functional modules (7A-7L) of analog, digital or analog and digital type, wherein there are provided at least three types of modular frame (3A-3C), which differ from each other in terms of geometrical dimensions and in each of which there can be housed respectively one, two or three standardized functional modules (7A-7L), **characterised in that** said assembly system further comprises at least one standardized modular faceplate (5A-5H, 6A-6T, 8A-8Z) for covering one of the outer surfaces of at least one of said standardized functional modules (7A-7L) and comprising control and/or indicating means relative to at least one of said standardized functional modules (7A-7L).

2. An assembly system as claimed in claim 1, **characterised in that** said standardized functional modules (7A-7L) comprise phonic modules, phonic modules with at least one call pushbutton, video modules for filming images by at least one telecamera, digital modules of numerical code type for calling various users, and accessory modules such as hole-cover modules.

3. An assembly system as claimed in claim 1, **characterised in that** the external station of the intercom or video-intercom system comprises a standardized functional module (7A-7L) housed in a first type of modular frame (3A), or two standardized functional modules (7A-7L) housed in a second type of modular frame (3B), or three standardized functional modules (7A-7L) housed in a third type of modular frame (3C).

4. An assembly system as claimed in claim 3, **characterised in that** the external station of the intercom or video-intercom system comprises four standardized functional modules (7A-7L) housed in pairs in two modular frames of the second type (3B), or six standardized functional modules (7A-7L) housed in threes in two modular frames of the third type (3C), or nine standardized functional modules (7A-7L) housed in threes in three modular frames of the third type (3C).

## Patentansprüche

1. Zusammensetzungssystem für Außenstationen in Gegensprechanlagen und Videogegensprechanlagevorrichtungen, bestehend aus einer Vielzahl standardisierter bausteinartiger Rahmen (3A - 3C), die entweder an standardisierten bausteinartigen Unterkapazitäten (2A - 2C) oder an auf der Wandfläche (11) liegenden Kästen befestigt sind und welche die Position einer Vielzahl standardisierter Funktionsmoduln von analogen, digitalen oder analog/digitalen Typ bestimmen, wobei wenigstens drei bausteinartige Rahmentypen (3A - 3C) vorgesehen sind, die sich in den geometrischen Abmessungen unterscheiden und in denen jeweils ein, zwei oder drei bausteinartige Funktionsmoduln (7A - 7L) eingesetzt werden können, **dadurch gekennzeichnet, dass** das Zusammensetzungssystem außerdem eine standardisierte bausteinartige Schirmplatte (5A - 5H, 6A - 6T, 8A - 8Z) zur Abdeckung einer der Außenflächen von wenigstens einem der standardisierten Funktionsmoduln (7A - 7L) sowie Steuer- und/oder Anzeigemittel im Verhältnis zu wenigstens einem der standardisierten Funktionsmoduln (7A - 7L) ausweist.

2. Zusammensetzungssystem nach Anspruch 1, **dadurch gekennzeichnet, dass** die standardisierten Funktionsmoduln (7A - 7L) phonetische Moduln, phonetische Moduln mit wenigstens einem Rufdruckschalter, Videomoduln zum Filmen von Bildern mit wenigstens einer Fernsehkamera, digitale Moduln vom numerischen Codetyp zum Rufen verschiedener Nutzer und Hilfsmoduln wie Loch-Abdeck-Moduln enthalten.

3. Zusammensetzungssystem nach Anspruch 1, **dadurch gekennzeichnet, dass** die Außenstation der Gegensprech- oder Videogegensprechanlage aus einem standardisierten Funktionsmodul (7A - 7L), das in einem ersten Typ des bausteinartigen Rahmens (3A) angeordnet ist, oder aus zwei standardisierten Funktionsmoduln (7A - 7L) die in einem zweiten Typ des bausteinartigen Rahmens (3B), oder aus drei standardisierten Funktionsmoduln (7A - 7L) bestehen, die in einem dritten Typs des bausteinartigen Rahmens (3C) untergebracht sind.

4. Zusammensetzungssystem nach Anspruch 3, **dadurch gekennzeichnet dass** die Außenstation der Gegensprech- oder Videogegensprechanlage aus vier standardisierten Funktionsmoduln (7A - 7L), die paarweise in zwei bausteinartigen Rahmen des zweiten Typs (3B) untergebracht sind, oder aus sechs standardisierten Funktionsmoduln (7A - 7L), die dreifach in zwei bausteinartigen Rahmen des dritten Typs (3C) angeordnet sind, oder aus neun standardisierten Funktionsmoduln bestehen, die dreifach in drei bausteinartigen Rahmen des dritten Typs (3C) untergebracht sind.

## Revendications

1. Système de montage pour postes extérieurs d'interphones et de visiophones, du type comprenant une pluralité de cadres modulaires normalisés (3A-3C), constitués de barres profilées qui sont fixées soit à des boîtiers modulaires encastrables normalisés (2A-2C), soit à des boîtiers fixés sur la surface d'un mur (11) et qui déterminent le positionnement d'une pluralité de modules fonctionnels normalisés (7A-7L) de type analogique, numérique ou analogique et numérique, dans lesquels sont fournis au moins trois types de cadres modulaires (3A-3C), qui diffèrent les uns des autres en termes de cotes géométriques et qui peuvent loger chacun un, deux ou trois modules fonctionnels normalisés (7A-7L), **caractérisé en ce que** ledit système de montage comprend en outre au moins une platine modulaire normalisée (5A-5H, 6A-6T, 8A-8Z) pour recouvrir l'une des surfaces externes d'au moins l'un desdits modules fonctionnels normalisés (7A-7L) et comprenant des moyens de contrôle et/ou d'indication par rapport à au moins l'un desdits modules fonctionnels normalisés (7A-7L).

2. Système de montage tel que revendiqué dans la revendication 1, **caractérisé en ce que** les modules fonctionnels normalisés (7A-7L) comprennent des modules phoniques, des modules phoniques équipés d'au moins un bouton-poussoir d'appel, des modules vidéo pour filmer des images en utilisant au moins une télécaméra, des modules numériques de type code numérique pour appeler divers utilisateurs, et des modules accessoires tels que des modules obturateurs.

3. Système de montage revendiqué dans la revendication 1, **caractérisé en ce que** le poste extérieur du système d'interphone ou de visiophone comprend un module fonctionnel normalisé (7A-7L) logé dans un premier type de cadre modulaire (3A), ou deux modules fonctionnels normalisés (7A-7L) logés dans un second type de cadre modulaire (3B), ou trois modules fonctionnels normalisés (7A-7L) logés dans un troisième type de cadre modulaire (3C).

4. Système de montage revendiqué dans la revendication 3, **caractérisé en ce que** le poste extérieur du système d'interphone ou de visiophone comprend quatre modules fonctionnels normalisés (7A-7L) logés par paires dans deux cadres modulaires du second type (3B), ou six modules fonctionnels normalisés (7A-7L) logés par trois dans deux cadres modulaires du troisième type (3C), ou neuf modules fonctionnels normalisés (7A-7L) logés par trois dans trois cadres modulaires du troisième type (3C).
